(19) Europäisches Patentamt
European Patent Office
Office européen des brevets

(11) **EP 4 762 943 A1**

(12) **EUROPEAN PATENT APPLICATION**
published in accordance with Art. 153(4) EPC

(43) Date of publication:
**24.06.2026 Bulletin 2026/26**

(21) Application number: **24854233.4**

(22) Date of filing: **16.08.2024**

(51) International Patent Classification (IPC):
**A23L 7/104** (2016.01)  **A23L 7/10** (2016.01)
**A23L 29/212** (2016.01)

(52) Cooperative Patent Classification (CPC):
**A23L 7/10; A23L 7/104; A23L 29/212**

(86) International application number:
**PCT/JP2024/029134**

(87) International publication number:
**WO 2025/037645 (20.02.2025 Gazette 2025/08)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **17.08.2023 JP 2023133064**

(71) Applicant: **Amano Enzyme Inc.**
**Nagoya-shi**
**Aichi 460-8630 (JP)**

(72) Inventor: **SAKAI, Kiyota**
**Kakamigahara-shi, Gifu 509-0109 (JP)**

(74) Representative: **Mullholland, Lewis Paul**
**WP Thompson**
**44 Southampton Buildings**
**London WC2A 1AP (GB)**

(54) **METHOD FOR PRODUCING STARCH-CONTAINING COMPOSITION FOR FREEZING**

(57)    [Problems]
To provide a novel technique for improving the freezing resistance of a starch-containing food.
[Solution]
Provided is a method for producing a starch-containing composition for freezing, which includes an enzyme treatment step of treating a starch-containing material with one or more enzymes selected from a microorganism-derived β-amylase, a soybean-derived β-amylase, and 4-α-glucanotransferase. The present technique also provides a method for producing a starch-containing composition, which includes a freezing step of freezing an enzyme-treated starch-containing composition obtained by treating a starch-containing material with one or more enzymes selected from a microorganism-derived β-amylase, a soybean-derived β-amylase, and 4-α-glucanotransferase.

## Description

Technical Field

The present technique relates to a method for producing a starch-containing composition for freezing. More specifically, the present technique relates to a method for producing a starch-containing composition for freezing, a method for producing a starch-containing composition, a method for improving the freezing resistance of a starch-containing composition, a method for maintaining or enhancing the sweetness of a starch-containing composition, an agent for improving the freezing resistance of a starch-containing composition, an agent for maintaining or enhancing the sweetness of a starch-containing composition, and a starch-containing composition.

Background Art

In recent years, advances in preservation and distribution techniques have led to an increase in the global market for frozen foods and drinks, and frozen confectioneries. However, it is known that when foods containing a large amount of starch are frozen, they are damaged by freezing, hardening, and other physical properties are affected. Against this background, techniques are being developed to improve the freezing resistance of starch-containing foods.

For example, Patent Literature 1 discloses a technique for producing frozen gyuhi blocks that contain gelatinized starch, sugar, and $\alpha,\alpha$-trehalose, as well as maltose and/or $\alpha$-maltosyl $\alpha,\alpha$-trehalose, and that have significantly better resistance to cold thawing than conventional gyuhi blocks used as dough for producing rice cake-like foods, by containing 150 to 400 parts by mass of saccharides per 100 parts by mass of starch, calculated on an anhydrous basis, and containing 30 to 250 parts by mass of sugar and 45 to 200 parts by mass of $\alpha,\alpha$-trehalose as saccharides, as well as 45 to 250 parts by mass of maltose and/or 10 to 250 parts by mass of $\alpha$-maltosyl $\alpha,\alpha$-trehalose.

Furthermore, Patent Literature 2 discloses a technique for producing frozen ohagi that does not harden when frozen and does not drip when thawed, by carrying out the following steps: a step of steaming glutinous rice that has been washed and soaked in water for a required time; a step of adding a sugar solution and an anti-aging agent solution to the steamed rice, which is the glutinous rice immediately after steaming, and mixing and stirring the mixture in a vacuum pot; a step of further stirring and mixing while heated; a step of transferring the mixture to a container, covering it, and leaving it for at least two hours; a step of shaping the steamed rice that has been cooled to an appropriate temperature into an appropriate filling, wrapping it in bean paste, and finishing it into ohagi; and a step of flash-freezing the finished ohagi.

Citation List

Patent Literature

Patent Literature 1: Japanese Patent Application Laid-Open No. 2011-115157
Patent Literature 2: Japanese Patent Application Laid-Open No. 2001-161277
Patent Literature 3: Japanese Patent Application Laid-Open No. 2019-115361
Patent Literature 4: Japanese Patent Application Laid-Open No. 9-107900

Summary of Invention

Technical Problem

As mentioned above, techniques for improving the freezing resistance of starch-containing foods are being developed, but the problem of hardening due to repeated freezing and thawing still remains, and further improvements are required.

Therefore, the main object of the present technique is to provide a novel technique for improving the freezing resistance of starch-containing foods.

Solution to Problem

As a result of extensive research to solve the above-mentioned problems, the present inventors found that even for enzymes that are said to have an action of preventing starch retrogradation (see, for example, Patent Literatures 3 and 4), the freezing resistance effect when frozen and thawed repeatedly varies depending on the type and origin of the enzyme. By using a specific enzyme, the present inventors succeeded in reliably improving the freezing resistance of starch-containing foods, leading to the completion of this technique.

That is, the present technique provides a method for producing a starch-containing composition for freezing, which includes an enzyme treatment step of treating a starch-containing material with one or more enzymes selected from a microorganism-derived β-amylase, a soybean-derived β-amylase, and 4-α-glucanotransferase.

The present technique also provides a method for producing a starch-containing composition, which includes a freezing step of freezing an enzyme-treated starch-containing composition obtained by treating a starch-containing material with one or more enzymes selected from a microorganism-derived β-amylase, a soybean-derived β-amylase, and 4-α-glucanotransferase.

The present technique also provides a method for producing a starch-containing composition, comprising an enzyme treatment step of treating a starch-containing material with one or more enzymes selected from a microorganism-derived β-amylase, a soybean-derived β-amylase, and 4-α-glucanotransferase, and a freezing step of freezing an enzyme-treated starch-containing composition.

In the present technique, next, provided are a method for improving the freezing resistance of a starch-containing composition and a method for maintaining or enhancing the sweetness of a starch-containing composition, comprising an enzyme treatment step of treating a starch-containing material with one or more enzymes selected from a microorganism-derived β-amylase, a soybean-derived β-amylase, and 4-α-glucanotransferase, and/or, a freezing step of freezing an enzyme-treated starch-containing composition obtained by treating a starch-containing material with one or more enzymes selected from a microorganism-derived β-amylase, a soybean-derived β-amylase, and 4-α-glucanotransferase.

The present technique further provides an agent for improving the freezing resistance of a starch-containing composition and an agent for maintaining or enhancing the sweetness of a starch-containing composition, each of which comprises one or more enzymes selected from a microorganism-derived β-amylase, a soybean-derived β-amylase, and 4-α-glucanotransferase.

In this technique, a microorganism-derived β-amylase and/or 4-α-glucanotransferase can be used as the enzyme.

In this case, a β-amylase derived from a microorganism of the genus Bacillus can be used as the microorganism-derived β-amylase.

The present technique also provides a starch-containing composition in which the agent for improving the freezing resistance or the agent for maintaining or enhancing the sweetness according to the present technique is used.

Description of Embodiments

A preferred embodiment for carrying out the present technique will be described below. It should be noted that the embodiment described below is an example of a typical embodiment of the present technique, and the scope of the present technique should not be interpreted as being narrowed.

1. Method for producing a starch-containing composition for freezing, method for producing a starch-containing composition, method for improving the freezing resistance of a starch-containing composition, method for maintaining or enhancing the sweetness of a starch-containing composition

The method for producing a starch-containing composition for freezing, the method for producing a starch-containing composition, the method for improving the freezing resistance of a starch-containing composition, and the method for maintaining or enhancing the sweetness of a starch-containing composition according to the present technique (hereinafter, these methods may be collectively referred to as "methods according to the present technique") include an enzyme treatment step and/or a freezing step. Furthermore, if necessary, a thawing step, a recovery step, or other steps generally used in the production of food and drink products can be appropriately selected and carried out. The raw materials and enzymes used in this technique, as well as each step, will be described in detail below.

(1) Raw materials

In the method according to the present technique, a starch-containing material is used as a raw material. The content of starch contained in the starch-containing material used in the present technique can be freely set as long as it does not impair the action and effect of the present technique. The lower limit of the starch content in the starch-containing material used in the present technique is, for example, 10% by weight or more, 20% by weight or more, or 30% by weight or more. From the viewpoint of further enhancing the freezing resistance action and the sweetness maintaining or enhancing action, the upper limit of the starch content contained in the starch-containing material is preferably 45% by weight or more, 55% by weight or more, more preferably 65% by weight or more, and even more preferably 75% by weight or more.

The upper limit of the starch content in the starch-containing material used in the present technique is, for example, 95% by weight or less, preferably 90% by weight or less, more preferably 85% by weight or less, and even more preferably 80% by weight or less, and may be 70% by weight or less, 60% by weight or less, 50% by weight or less, 40% by weight or less, or 30% by weight or less.

The origin of the starch-containing material is not particularly limited as long as it does not impair the action and effect of the present technique, and can be freely selected depending on the target starch-containing material. Examples include rice varieties such as Japonica rice, Indica rice, Javanica rice, and non-glutinous rice; cereal grains such as oats, wheat, barley, and rye; tuber crops such as potatoes, sweet potatoes, taro, Chinese yams, konjac potatoes, and cassava; legumes such as kudzu; and ferns such as bracken. The starch-containing material may be in the form of granules, powder, slurry, or liquid. Preferably, granular or powdery starch-containing materials are used. When using a granular or powdery starch-containing material, it is advisable to mix it with an appropriate amount of water. Specific examples of powdery starch-containing materials include wheat flour, rice flour, potato starch, and arrowroot starch.

(2) Microorganism-derived β-amylase, soybean-derived β-amylase

The β-amylase (EC 3.2.1.2) used in this technique is an exo-type enzyme that sequentially cleaves α-1,4 glycosidic bonds from the non-reducing end of starch to release maltose (malt sugar) units. In this technique, it has been found that among β-amylases, a microorganism-derived β-amylase and a soybean-derived β-amylase in particular have the action of improving the freezing resistance of a starch-containing composition and the action of enhancing the sweetness of a starch-containing composition.

Examples of β-amylases derived from microorganisms include β-amylases derived from microorganisms of the genus Bacillus [e.g., Bacillus flexus, Bacillus megaterium, Bacillus polymyxa, Bacillus circulans, etc.]; Streptomyces sp.; Pseudomonas sp.; and the like.

These microorganism-derived β-amylases and soybean-derived β-amylases may be used alone or in combination of two or more kinds.

In the present technique, it is particularly preferable to use a microorganism-derived β-amylase as the β-amylase, more preferably a β-amylase derived from the genus Bacillus, and even more preferably a β-amylase derived from Bacillus flexus. Here, "β-amylase derived from Bacillus flexus" means a β-amylase produced by a microorganism classified as Bacillus flexus (whether a wild-type strain or a mutant strain), or a β-amylase obtained by genetic engineering techniques using a β-amylase gene. Therefore, a recombinant produced by a host microorganism into which a β-amylase gene obtained from Bacillus flexus (or a gene obtained by modifying said gene) has been introduced also falls under the category of "β-amylase derived from Bacillus flexus".

The microorganism-derived β-amylase and soybean-derived β-amylase can be prepared from soybeans or a culture broth of microorganisms from which they are derived. A specific preparation method includes a method in which β-amylase is recovered from a culture solution or microbial bodies of soybeans or microorganisms. For example, when a β-amylase-secreting microorganism is used, the microbial bodies may be recovered from the culture solution in advance by filtration, centrifugation, or the like, if necessary, and then the enzyme can be separated and/or purified. Furthermore, when a non-β-amylase-secreting microorganism is used, the microbial bodies may be recovered from the culture solution in advance, if necessary, and then the microbial bodies were disrupted by pressure treatment, ultrasonic treatment, or the like to extract the enzyme, which can then be separated and/or purified. As a method for separating and/or purifying the enzyme, any known protein separation and/or purification method can be used without any particular limitation, and examples thereof include centrifugation, UF concentration, salting out, and various chromatographic methods using ion exchange resins, etc. The separated and/or purified enzyme can be powdered by a drying method such as freeze-drying or vacuum drying, and can also be powdered using an appropriate excipient and/or drying aid in the drying method. The separated and/or purified enzyme can also be formulated as a liquid by adding an appropriate additive and sterilizing by filtration.

In this technique, not only natural (wild-type) β-amylase but also recombinant β-amylase obtained by genetic engineering techniques as described above can be used. Commercially available β-amylase or β-amylase preparations can also be used. An example of the commercially available β-amylase or β-amylase preparation is a β-amylase derived from Bacillus flexus manufactured by Amano Enzyme Inc.

In the present technique, the amount of a microorganism-derived β-amylase or a soybean-derived β-amylase used is not particularly limited as long as it does not impair the action and effect of the present technique. The lower limit of the amount of a microorganism-derived β-amylase or a soybean-derived β-amylase used is, for example, 0.005 U or more per 1 g of starch. From the viewpoint of further enhancing the freezing resistance action and the sweetness enhancing action, the lower limit of the amount of a microorganism-derived β-amylase or a soybean-derived β-amylase used is preferably 0.025 U or more, more preferably 0.05 U or more, even more preferably 0.4 U or more, still more preferably 0.7 U or more, and particularly preferably 1.0 U or more per 1 g of starch.

The upper limit of the amount of a microorganism-derived β-amylase or a soybean-derived β-amylase used per 1 g of starch is, for example, 50 U or less, 30 U or less, 20 U or less, 10 U or less, 5.0 U or less, 3.0 U or less, 2.0 U or less, or 1.6 U or less.

In the present technique, the β-amylase activity is a value measured by the β-amylase activity measurement method described in the Examples below, and one unit (1 U) is defined as the amount of enzyme that causes an increase in reducing power equivalent to 1 mg of glucose per minute using a potato starch solution (pH 5.0) as a substrate.

(3) 4-α-glucanotransferase

The 4-α-glucanotransferase (EC 2.4.1.25) used in the present technique is an enzyme that catalyzes a chemical reaction that transfers a portion of 1,4-α-glucan to another portion of a carbohydrate such as glucose or 1,4-α-D-glucan. The 4-α-glucanotransferase used in the present technique is not particularly limited in type or origin thereof, as long as it is an enzyme that acts on polysaccharides and oligosaccharides having α-1,4 glycosidic bonds and transfers maltotriose units to saccharides.

The origin of the 4-α-glucanotransferase may be either plant-derived or microorganism-derived, and the plant-derived examples include 4-α-glucanotransferases derived from potato (Solanum tuberosum L.) tubers, and the microorganism-derived examples include 4-α-glucanotransferases derived from actinomycetes (limited to Streptomyces avermitilis, Streptomyces cinnamoneus, Streptomyces griseus, Streptomyces thermoviolaceus, and Streptomyces violaceoruber) or bacteria (Agrobacterium radiobacter, Arthrobacter spp., Bacillus spp., Erwinia spp., Geobacillus pallidus, Geobacillus stearothermophilus, Gluconobacter oxydans, Leuconostoc mesenteroides, Paenibacillus alginolyticus, Pimelobacter spp., Protaminobacter spp., Pseudomonas spp., Serratia spp., Sporosarcina globispora, and Thermus spp., and Aeribacillus pallidus).

These 4-α-glucanotransferases may be used alone or in combination of two or more kinds.

In the present technique, it is particularly preferable to use a microorganism-derived 4-α-glucanotransferase as the 4-α-glucanotransferase, it is more preferable to use a 4-α-glucanotransferase derived from Aeribacillus, and it is even more preferable to use a 4-α-glucanotransferase derived from Aeribacillus pallidus. Here, "4-α-glucanotransferase derived from Aeribacillus pallidus" means a 4-α-glucanotransferase produced by a microorganism classified as Aeribacillus pallidus (which may be a wild-type strain or a mutant strain), or a 4-α-glucanotransferase obtained by genetic engineering techniques using the 4-α-glucanotransferase gene. Therefore, a recombinant produced by a host microorganism into which a 4-α-glucanotransferase gene obtained from Aeribacillus pallidus (or a gene obtained by modifying said gene) has been introduced also falls under the category of "4-α-glucanotransferase derived from Aeribacillus pallidus".

4-α-glucanotransferase can be prepared from a plant material or a culture broth of a microorganism from which it is derived. The specific preparation method is the same as the above-mentioned method for preparing β-amylase.

In this technique, not only natural (wild-type) 4-α-glucanotransferases but also recombinant 4-α-glucanotransferases obtained by genetic engineering techniques as described above can be used. Commercially available 4-α-glucanotransferase or 4-α-glucanotransferase preparations can also be used. An example of a commercially available 4-α-glucanotransferase or 4-α-glucanotransferase preparation is 4-α-glucanotransferase derived from Aeribacillus pallidus, manufactured by Amano Enzyme Inc.

In the present technique, the amount of the microorganism-derived 4-α-glucanotransferase used is not particularly limited as long as it does not impair the action and effect of the present technique. The lower limit of the amount of 4-α-glucanotransferase used is, for example, 0.05 U or more per 1 g of starch. From the viewpoint of further enhancing the freezing resistance action and the sweetness-maintaining action, the lower limit of the amount of 4-α-glucanotransferase used is preferably 0.25 U or more, more preferably 0.5 U or more, even more preferably 1.75 U or more, and even more preferably 3.0 U or more per 1 g of starch.

The upper limit of the amount of 4-α-glucanotransferase used per 1 g of starch is, for example, 150 U or less, 100 U or less, 70 U or less, 50 U or less, 30 U or less, 20 U or less, 15 U or less, or 10 U or less.

In this technique, the 4-α-glucanotransferase activity is a value measured by the 4-α-glucanotransferase activity measurement method described in the Examples below, and one unit (1 U) is defined as the amount of enzyme that produces 1 μmol of glucose per minute when treated with maltotetraose as a substrate at pH 6.5 and 40°C.

(4) Enzyme treatment step

The enzyme treatment step is a step of treating a starch-containing material with one or more enzymes selected from a microorganism-derived β-amylase, a soybean-derived β-amylase, and 4-α-glucanotransferase. These enzymes may be used alone or in combination of two or more kinds. When two or more kinds of enzymes are used in combination, a starch-containing material may be treated with two or more kinds of enzymes simultaneously, or separately. When treated with two or more kinds of enzymes separately, the order of the treatments is not particularly limited. When treated with two or more kinds of enzymes separately, an enzyme inactivation step may be carried out between the treatments with the enzymes.

The various conditions for treating a starch-containing material with the enzyme can be freely set as long as they do not impair the effect of the present technique. For example, the pH, temperature, treatment time, etc. can be set depending on the physicochemical properties of the enzyme used, such as the optimum pH, stable pH range, optimum temperature, and temperature stability. The optimum reaction conditions can be determined through preliminary experiments.

When a starch-containing material is treated with a microorganism-derived β-amylase and/or a soybean-derived β-amylase, the pH can be set to, for example, pH 3.0 to 11.0, preferably pH 5.0 to 8.0, and more preferably pH 6.0 to 7.0. When a starch-containing material is treated with a microorganism-derived β-amylase and/or a soybean-derived β-amylase, the temperature can be set to, for example, 10°C to 80°C, preferably 20°C to 60°C, and more preferably 30°C to 50°C. When a starch-containing material is treated with a microorganism-derived β-amylase and/or a soybean-derived β-amylase, the treatment time can be set to, for example, 5 minutes to 20 hours, 10 minutes to 10 hours, preferably 30 minutes to 5 hours, and more preferably 1 hour to 4 hours.

When a starch-containing material is treated with 4-α-glucanotransferase, the pH can be set to, for example, pH 4.0 to 10.0, preferably pH 5.0 to 9.0, more preferably pH 5.0 to 8.0, or pH 5.0 to 7.0. When a starch-containing material is treated with 4-α-glucanotransferase, the temperature can be set to, for example, 20°C to 90°C, preferably 30°C to 70°C, and more preferably 35°C to 60°C. When a starch-containing material is treated with 4-α-glucanotransferase, the treatment time can be set to, for example, 5 minutes to 20 hours, 10 minutes to 10 hours, preferably 30 minutes to 5 hours, and more preferably 1 hour to 4 hours.

(5) Freezing step

The freezing step is a step of freezing an enzyme-treated starch-containing composition obtained by treating a starch-containing material with one or more enzymes selected from a microorganism-derived β-amylase, a soybean-derived β-amylase, and 4-α-glucanotransferase.

The enzyme treatment step and the freezing step may be carried out in the same institution or in different institutions. For example, one institution may carry out the enzyme treatment step and freeze the obtained enzyme-treated starch-containing composition, or one institution may carry out the enzyme treatment step and distribute the obtained enzyme-treated starch-containing composition, and another institution may carry out a step of freezing the enzyme-treated starch-containing composition.

The conditions for the freezing step are not particularly limited as long as they do not impair the action and effect of the present technique, and any general freezing method can be freely adopted. For example, freezing at around -20°C can be used.

(6) Thawing step

The thawing step is a step of thawing the frozen enzyme-treated starch-containing composition.

The enzyme treatment step, the freezing step, and the thawing step may be carried out in the same institution or in different institutions. For example, one institution may carry out the enzyme treatment step and freeze and store the obtained enzyme-treated starch-containing composition, and then thaw it, or one institution may carry out the enzyme treatment step and distribute the obtained enzyme-treated starch-containing composition, another institution may carry out a step of freezing the enzyme-treated starch-containing composition, and distribute the frozen enzyme-treated starch-containing composition, and yet another institution may thaw the frozen enzyme-treated starch-containing composition. It is also possible to freeze the enzyme-treated starch-containing composition obtained by carrying out the enzyme treatment step, distribute the frozen enzyme-treated starch-containing composition, and have purchasers the frozen enzyme-treated starch-containing composition thaw it.

The specific method for the thawing step is not particularly limited as long as it does not impair the action and effect of the present technique, and any general thawing method can be freely adopted. For example, thawing can be performed at room temperature, at refrigeration temperature, under running water, or by heating such as microwave heating, hot water bath, steaming, boiling, baking or the like.

(7) Recovery step

The recovery step is a step of recovering the starch-containing composition or the starch-containing composition for freezing that has been produced through the enzyme treatment step and/or the freezing step, and, if necessary, the thawing step. As for the specific recovery method, one or a combination of two or more general recovery methods used in the production of starch-containing compositions or starch-containing compositions for freezing can be used freely depending on the type of the starch-containing composition or starch-containing composition for freezing to be produced.

The method according to the present technique described above can be embodied as including the following steps (1) to (6).

(1) A step of preparing a starch-containing material

(2) A step of treating the prepared starch-containing material with one or more enzymes selected from a microorganism-derived β-amylase, a soybean-derived β-amylase, and 4-α-glucanotransferase.

(3) A step of inactivating the one or more enzymes

(4) A step of freezing an enzyme-treated starch-containing composition obtained by treating a starch-containing material with one or more enzymes selected from a microorganism-derived β-amylase, a soybean-derived β-amylase, and 4-α-glucanotransferase.

(5) A step of thawing the frozen enzyme-treated starch-containing composition

(6) A step of recovering the produced starch-containing composition or starch-containing composition for freezing.

Either or both of steps (2) and (4) may be performed. Steps (3), (5), and (6) are not essential and can be carried out as needed. When multiple enzymes are used in step (2), an enzyme inactivation step of step (3) may be carried out between the treatments with the enzymes.

2. Agent for improving freezing resistance of starch-containing composition, and agent for maintaining or enhancing sweetness of starch-containing composition

The agent for improving the freezing resistance of a starch-containing composition and the agent for maintaining or enhancing the sweetness of a starch-containing composition according to the present technique contain one or more enzymes selected from a microorganism-derived β-amylase, a soybean-derived β-amylase, and 4-α-glucanotransferase. If desired, other enzymes and other components may also be included. The details of the β-amylase, soybean-derived β-amylase, and 4-α-glucanotransferase are the same as those of the enzymes used in the method according to the present technique described above, and therefore will not be described here.

(1) Other components

The agent for improving the freezing resistance of a starch-containing composition and the agent for maintaining or enhancing the sweetness of a starch-containing composition according to the present technique can be used in combination with other components as long as the action and effect of the present technique are not impaired. Examples of other components that can be used include excipients, pH adjusters, colorants, flavoring agents, disintegrants, lubricants, stabilizers, enzymes, and other components that are commonly used in formulations. Furthermore, components having known or future functions can also be used in combination depending on the purpose.

3. Starch-containing composition, starch-containing composition for freezing

A starch-containing composition or a starch-containing composition for freezing produced using the method according to the present technique or the agent for improving the freezing resistance of a starch-containing composition or the agent for maintaining or enhancing the sweetness of a starch-containing composition according to the present technique is characterized by having higher freezing resistance than a starch-containing composition or a starch-containing composition for freezing produced by a general method.

Furthermore, a starch-containing composition or a starch-containing composition for freezing produced using the method according to the present technique or the agent for improving the freezing resistance of a starch-containing composition or the agent for maintaining or enhancing the sweetness of a starch-containing composition according to the present technique can maintain a sweetness equivalent to that of a starch-containing composition or a starch-containing composition for freezing produced by a general method, and, if necessary, can have a sweetness that is stronger than that of a starch-containing composition or a starch-containing composition for freezing produced by a general method.

For example, when 4-α-glucanotransferase is used as the enzyme, the sweetness can be maintained, i.e., the freezing resistance can be improved without affecting the taste such as sweetness. For example, when β-amylase derived from a microorganism or β-amylase derived from soybeans is used as the enzyme, in addition to improving the freezing resistance, the sweetness can also be enhanced.

The starch-containing composition and the starch-containing composition for freezing according to the present technique can be suitably used for any purpose. For example, it can be used in foods and drinks.

Examples of foods and drinks include Japanese sweets (rice cakes, manju, daifuku, castella, etc.), Western sweets (cakes, donuts, pies, pastries, etc.), prepared foods (cooked rice, rice balls, grilled rice balls, fried rice, pilaf, paella, Chinese buns, takoyaki, okonomiyaki, etc.), breads (leavened bread, unleavened bread, yeast bread, non-yeast bread (soda bread, etc.), bread containing wheat flour, bread not containing wheat flour (e.g., potato, rice, rye, etc.), gluten-free bread, etc.).

The distribution form of the starch-containing composition and the starch-containing composition for freezing according to the present technique is not particularly limited as long as they undergo a freezing step at any point from production to consumption. For example, it can be distributed in a frozen state, a refrigerated state, a chilled state, or at room temperature. Furthermore, a starch-containing composition that has been frozen, refrigerated, chilled, or stored at room temperature, or a starch-containing composition for freezing, may be cooked by heating in a store or the like and distributed as a cooked starch-containing composition.

EXAMPLES

The present invention will be described in more detail below based on examples. The embodiment described below is merely a representative example of the present invention, and the scope of the present invention should not be construed as being narrowed.

1. Raw material

The raw materials and enzymes used in the examples are shown in Table 1 below.

[Table 1]

| Name of substance | Product name | Distribution source |
|---|---|---|
| Joshinko | Joshinko/1 kg of joshinko of TOMIZAWA SHOUTEN | TOMIZ (TOMIZAWA SHOUTEN) |
| 4-$\alpha$-glucanotransferase | *Aeribacillus pallidus*- derived 4-$\alpha$-glucanotransferase | Amano Enzyme Inc. |
| $\beta$-amylase 1 | *Bacillus flexus*- derived $\beta$-amylase | Amano Enzyme Inc. |
| $\beta$-amylase 2 | Soybean-derived $\beta$-amylase | Nagase ChemteX Corporation |

2. Enzyme activity measurement method

[Method for measuring $\beta$-amylase activity]

Measurement was carried out according to the method described in the Japan's Specifications and Standards for Food Additives (9th edition). Specifically, potato starch was used as the substrate and was dried at 105°C for 2 hours. 1.0 g of the dried material was weighed out, 20 mL of water was added, and 5 mL of sodium hydroxide reagent solution (2 mol/L) was gradually added with stirring to form a paste. Next, the mixture was heated in a water bath with stirring for 3 minutes, and then 25 mL of water was added. After cooling, the solution was neutralized by adding hydrochloric acid reagent solution (2 mol/L) and hydrochloric acid reagent solution (0.1 mol/L), and 10 mL of 1 mol/L acetic acid/sodium acetate buffer solution (pH 5.0) was added, followed by adding water to make 100 mL, which was used as a substrate solution.
10 mL of the substrate solution was measured out, heated at 37°C for 10 minutes, 1 mL of a sample solution was added, shaken immediately, heated at the same temperature for 10 or 30 minutes, then, 4 mL of the Fehling's reagent solution was further added, shaken gently, heated in a water bath for 15 minutes, then, cooled to 25°C or lower, and 2 mL of a 30% potassium iodide solution and 2 mL of sulfuric acid ($1 \rightarrow 6$) were added to prepare a test solution. Fehling's reagent solution was prepared just before use by mixing 1 volume of copper solution to 1 volume of alkaline tartrate solution. The copper solution was prepared by weighing 34.66 g of fine crystals of copper (II) sulfate pentahydrate and adding water to dissolve it to make 500 mL of copper solution, and the alkaline tartrate solution was prepared by weighing 173 g of sodium potassium (+)-tartrate tetrahydrate and 50 g of sodium hydroxide and adding water to dissolve it to make 500 mL of alkaline tartrate solution. Separately, a control solution was prepared in the same manner as in the preparation of the test solution, except that 10 mL of water was used instead of the substrate solution. The liberated iodine in the test solution and the control solution was titrated with 0.05 mol/L sodium thiosulfate solution. The end point was determined when 1 to 2 drops of soluble starch reagent solution was added when the titration was nearing the end point and the resulting blue color disappeared.
The amount of enzyme that causes an increase in reducing power equivalent to 1 mg of glucose per minute is defined as 1 unit (1 U), and was calculated using the following formula:

$$\beta\text{-amylase activity (U/g, U/mL)} = \text{amount of glucose (mg)} \times 1/10 \times 1/M$$

$$\text{Amount of glucose (mg)} = (b - a) \times 1.6 \times f$$

8

a: Titration value of enzyme reaction solution (mL)
b: Titration value of blank solution (mL)
1.6: 1 mL of 0.05 mol/L sodium thiosulfate solution is equivalent to 1.6 mg of glucose
1/10: Unit conversion factor for reaction time (minutes)
M: Amount of sample in 1 mL of sample solution (g or mL)
f: Factor of 0.05 mol/L sodium thiosulfate solution (for quantitative analysis)

[Method for measuring 4-α-glucanotransferase activity]

180 mg of maltotetraose (Hayashibara) is weighed out and placed in a 20 mL volumetric flask. Approximately 15 mL of 10 mmol/L MES buffer solution (pH 6.5) is added to dissolve the sample. After dissolution, 10 mmol/L MES buffer solution (pH 6.5) was added to make a final volume of 20 mL, which was used as a substrate solution.

2 mL of the substrate solution was measured into a test tube and left at 40±0.5°C for 10 to 15 minutes, after which 0.5 mL of the sample solution was added, shaken well, and left at 40±0.5°C for exactly 60 minutes. After standing, the sample was placed in a boiling water bath and heated for exactly 5 minutes, and then cooled in running water. The produced glucose was quantified using a Labo Assay Glucose (Fujifilm Wako Pure Chemical Corporation). The Lab Assay Glucose kit consists of a coloring agent containing mutarotase, glucose oxidase, peroxidase, 4-aminoantipyrine, and ascorbic acid oxidase, and a buffer solution containing phosphate buffer solution (pH 7.1) and phenol. It is capable of determining glucose concentration by measuring the red pigment produced by the oxidative condensation of phenol and 4-aminoantipyrine.

Under these conditions, the amount of enzyme that produces 1 μmol of glucose per minute was defined as 1 unit.

3. Experimental example

(1) Method

In this experimental example, rice cake was produced as an example of a starch-containing composition.

A steamer was filled with a little more than half the capacity of water, placed on a gas stove and lit. 200 g of joshinko was weighed directly into the stainless steel bowl of a mixer, the stainless steel bowl was set in the mixer, and the components were mixed using the stirring blades. While mixing, 155 g of water was gradually added, and when the steamer reached to a boil, the starch-containing composition (rice cake) was wrapped in a steaming cloth on the steamer and steamed over high heat for 15 minutes. The mixture was stirred again with the mixer for 10 minutes to ensure that the mixture was thoroughly mixed. When the temperature of the starch-containing composition (rice cake) reached 65°C or below, an enzyme solution (5 mL) suspended in water was added. After stirring again in a mixer for 5 minutes to ensure that the mixture was thoroughly mixed, the starch-containing composition (rice cake) was packed uniformly into a glass petri dish, incubated at 37°C for 3 hours, and then heat-treated at 90°C for 10 minutes (enzyme inactivation step). The starch-containing composition (rice cake) was left at room temperature until it reached 25°C, and then flour was applied to the top, and the stress of the starch-containing composition (rice cake) was measured using a rheometer (manufactured by Sun Scientific Co., Ltd.). The starch-containing composition (rice cake) was then frozen at -20°C. To evaluate the freezing resistance of the starch-containing composition (rice cake), the frozen starch-containing composition (rice cake) was thawed at room temperature, and the stress of the starch-containing composition (rice cake) was measured using a rheometer (manufactured by Sun Scientific Co., Ltd.), and then the starch-containing composition (rice cake) was refrozen at -20°C. This procedure was repeated three times.

(2) Sensory evaluation

The starch-containing composition (rice cake) produced above was subjected to three freeze-thaw cycles and the taste (increase or decrease in sweetness) was evaluated according to the following evaluation criteria.

0: No change (equivalent to the control example)
+: Slightly sweeter than the control example
++: Significantly sweeter than the control example

(3) The results are shown in Table 2 below.

[Table 2]

| | | | Control example | Example | | | |
|---|---|---|---|---|---|---|---|
| | | | | 1 | 2 | 3 | 4 |
| Enzyme used | 4-α-glucanotransferase | U/g-starch | - | - | - | 3.51 | 7.02 |
| | β-amylase 1 (derived from microorganism) | | - | - | 1.52 | - | - |
| | β-amylase 2 (derived from soybean) | | - | 1.40 | - | - | - |
| Stress (N) | Before freezing and thawing | | 74 | 65 | 55 | 47 | 58 |
| | Freezinig and thawing | 1-st time | 373 | 76 | 48 | 48 | 59 |
| | | 2-nd time | Not measurable | 79 | 45 | 59 | 57 |
| | | 3-rd time | Not measurable | 82 | 42 | 59 | 54 |
| Sensory evaluation (taste) | | | 0 | ++ | ++ | 0 | 0 |

(4) Discussion

As shown in Table 2, in the case of the non-enzyme treated sample (control example), the stress increased with repeated freezing and thawing compared to the sample before freezing and thawing. Furthermore, from the second freeze-thaw cycle onward, the sample hardened to the extent that stress could not be measured. On the other hand, in the enzyme treatments (Examples 1 to 4), there was no increase in stress even after repeated freezing and thawing, and softness was maintained compared to the control example. Comparing the examples, Example 2, which used a microorganism-derived β-amylase, and Examples 3 and 4, which used 4-α-glucanotransferase, showed higher freezing resistance effects than Example 1, which used a soybean-derived β-amylase.

In the evaluation of sweetness, Examples 3 and 4, which used 4-α-glucanotransferase, gave results similar to those of the control example. On the other hand, it was found that Examples 1 and 2, which used β-amylase, had an enhanced sweetness compared to the control example. Based on these results, for applications where it is desired to enhance sweetness while improving freezing resistance, it is preferable to select a soybean-derived β-amylase and/or microorganism-derived β-amylase, and for applications where it is desired to improve freezing resistance without changing taste properties such as sweetness, it is preferable to select 4-α-glucanotransferase.

## Claims

1. A method for producing a starch-containing composition for freezing, comprising an enzyme treatment step of treating a starch-containing material with one or more enzymes selected from a microorganism-derived β-amylase, a soybean-derived β-amylase, and 4-α-glucanotransferase.

2. A method for producing a starch-containing composition, comprising a freezing step of freezing an enzyme-treated starch-containing composition obtained by treating a starch-containing material with one or more enzymes selected from a microorganism-derived β-amylase, a soybean-derived β-amylase, and 4-α-glucanotransferase.

3. A method for producing a starch-containing composition, comprising

an enzyme treatment step of treating a starch-containing material with one or more enzymes selected from a microorganism-derived β-amylase, a soybean-derived β-amylase, and 4-α-glucanotransferase, and
a freezing step of freezing an enzyme-treated starch-containing composition.

4. A method for improving the freezing resistance of a starch-containing composition, comprising

an enzyme treatment step of treating a starch-containing material with one or more enzymes selected from a microorganism-derived β-amylase, a soybean-derived β-amylase, and 4-α-glucanotransferase, and/or
a freezing step of freezing an enzyme-treated starch-containing composition obtained by treating a starch-containing material with one or more enzymes selected from a microorganism-derived β-amylase, a soybean-derived β-amylase, and 4-α-glucanotransferase.

5. A method for maintaining or enhancing the sweetness of a starch-containing composition, comprising

an enzyme treatment step of treating a starch-containing material with one or more enzymes selected from a microorganism-derived β-amylase, a soybean-derived β-amylase, and 4-α-glucanotransferase, and/or
a freezing step of freezing an enzyme-treated starch-containing composition obtained by treating a starch-containing material with one or more enzymes selected from a microorganism-derived β-amylase, a soybean-derived β-amylase, and 4-α-glucanotransferase.

6. An agent for improving the freezing resistance of a starch-containing composition, comprising one or more enzymes selected from a microorganism-derived β-amylase, a soybean-derived β-amylase, and 4-α-glucanotransferase.

7. An agent for maintaining or enhancing the sweetness of a starch-containing composition, comprising one or more enzymes selected from a microorganism-derived β-amylase, a soybean-derived β-amylase, and 4-α-glucanotransferase.

8. The production method according to any one of claims 1 to 3, the method for improving the freezing resistance according to claim 4, the method for maintaining or enhancing the sweetness according to claim 5, the agent for improving the freezing resistance according to claim 6, or the agent for maintaining or enhancing the sweetness according to claim 7, wherein the one or more enzymes is a microorganism-derived β-amylase and/or 4-α-glucanotransferase.

9. The production method, the method for improving the freezing resistance, the method for maintaining or enhancing the sweetness, the agent for improving the freezing resistance, or the agent for maintaining or enhancing the sweetness according to claim 8, wherein the microorganism is a microorganism of the genus Bacillus.

10. A starch-containing composition, in which the agent for improving the freezing resistance according to claim 6 or the agent for maintaining or enhancing the sweetness according to claim 7 is used.

## INTERNATIONAL SEARCH REPORT

| International application No. |
|---|
| **PCT/JP2024/029134** |

**A. CLASSIFICATION OF SUBJECT MATTER**

*A23L 7/104*(2016.01)i; *A23L 7/10*(2016.01)i; *A23L 29/212*(2016.01)i
FI:   A23L7/104; A23L7/10 102; A23L29/212

According to International Patent Classification (IPC) or to both national classification and IPC

**B. FIELDS SEARCHED**

Minimum documentation searched (classification system followed by classification symbols)

A23L7/104; A23L7/10; A23L29/212

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

JSTPlus/JMEDPlus/JST7580 (JDreamIII)

**C. DOCUMENTS CONSIDERED TO BE RELEVANT**

| Category* | Citation of document, with indication, where appropriate, of the relevant passages | Relevant to claim No. |
|---|---|---|
| X | LEE, Kwang-Yeon et al. Effects of α-glucanotransferase treatment on the thermo-reversibility and freeze-thaw stability of a rice starch gel. Carbohydrate Polymers. 2006, vol. 63, pp. 347-354<br>title, p. 347, right column, lines 18-21, p. 349, 2.6. Freeze-thaw stability, p. 353, 3.6. Freeze-thaw stability | 1-4, 6, 8-10 |
| A | | 5, 7 |
| X | JP 2003-512046 A (NOVOZYMES A/S) 02 April 2003 (2003-04-02)<br>claims, paragraphs [0002], [0023]-[0025] | 1-3, 8-9 |
| A | | 4-7, 10 |
| Y | WO 2009/151042 A1 (ORIENTAL YEAST CO., LTD.) 17 December 2009 (2009-12-17)<br>claims, paragraphs [0033]-[0046], [0052]-[0054] | 1-10 |
| Y | JP 62-79746 A (SHOWA SANGYO CO., LTD.) 13 April 1987 (1987-04-13)<br>claims, prior art | 1-10 |

☑ Further documents are listed in the continuation of Box C. ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" document member of the same patent family |
| "P" | document published prior to the international filing date but later than the priority date claimed | |

| Date of the actual completion of the international search | Date of mailing of the international search report |
|---|---|
| **08 October 2024** | **29 October 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**

| International application No. |
| --- |
| **PCT/JP2024/029134** |

**C.    DOCUMENTS CONSIDERED TO BE RELEVANT**

| Category* | Citation of document, with indication, where appropriate, of the relevant passages | Relevant to claim No. |
| --- | --- | --- |
| A | JP 2014-033649 A (MEIHAN SHOKUHIN CO., LTD.) 24 February 2014 (2014-02-24) | 1-10 |
| A | WO 2020/090734 A1 (AMANO ENZYME INC.) 07 May 2020 (2020-05-07) | 1-10 |
| A | JP 2018-061517 A (AMANO ENZYME INC.) 19 April 2018 (2018-04-19) | 1-10 |
| A | JP 9-187289 A (KABUSHIKI KAISHA HAYASHIBARA SEIBUTSU KAGAKU KENKYUJO) 22 July 1997 (1997-07-22) | 1-10 |

Form PCT/ISA/210 (second sheet) (July 2022)

## INTERNATIONAL SEARCH REPORT
### Information on patent family members

International application No.

**PCT/JP2024/029134**

| Patent document cited in search report | | | Publication date (day/month/year) | Patent family member(s) | | | Publication date (day/month/year) |
|---|---|---|---|---|---|---|---|
| JP | 2003-512046 | A | 02 April 2003 | (Family: none) | | | |
| WO | 2009/151042 | A1 | 17 December 2009 | CN | 102056500 | A | |
| | | | | KR | 10-2011-0033123 | A | |
| JP | 62-79746 | A | 13 April 1987 | (Family: none) | | | |
| JP | 2014-033649 | A | 24 February 2014 | (Family: none) | | | |
| WO | 2020/090734 | A1 | 07 May 2020 | JP | 2024-91998 | A | |
| | | | | US | 2021/0388406 | A1 | |
| | | | | EP | 3875589 | A1 | |
| | | | | CN | 112912504 | A | |
| JP | 2018-061517 | A | 19 April 2018 | US | 2014/0023748 | A1 | |
| | | | | WO | 2012/105532 | A1 | |
| | | | | EP | 2671456 | A1 | |
| | | | | CN | 103369973 | A | |
| | | | | KR | 10-2014-0020849 | A | |
| JP | 9-187289 | A | 22 July 1997 | (Family: none) | | | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011115157 A
- JP 2001161277 A
- JP 2019115361 A
- JP 9107900 A

**Non-patent literature cited in the description**

- Japan's Specifications and Standards for Food Additives